# EUROPÄISCHE PATENTANMELDUNG

(11) **EP 1 725 081 A2**
(43) Veröffentlichungstag der Anmeldung: **22.11.2006**
(21) Anmeldenummer: 06009634.4
(22) Anmeldetag: 10.05.2006
(51) Int. Cl.: H05B 37/02

(54) **Verfahren zur Einstellung von Helligkeitsschwellwerten bei Präsenzmeldern**

(30) Priorität: 11.05.2005 DE 102005022491; 30.09.2005 DE 102005047337
(71) Anmelder: Brück, Dietmar F., Hong-Kong (HK)
(72) Erfinder: Brück, Dietmar F., Hong-Kong (HK)
(74) Vertreter: Hudler, Frank

(57) **Zusammenfassung**

Die Erfindung betrifft ein Verfahren zur Einstellung von Helligkeitsschwellwerten bei mit einem lichtempfindlichen Sensor sowie zugehörigen Lastwiderständen ausgestatteten Präsenzmeldern. Durch die Erfindung soll eine einfache und schnelle Kalibrierung erreicht werden. Erreicht wird das durch Speichern einer Strom/Spannung/Lux-Kennlinie im Micro-Controller (5), Senden eines vorgegebenen Lux-Wertes für einen Arbeitsplatz (9) an den Micro-Controller (5), Messen des aktuellen Lux-Wertes am Arbeitsplatz (5), Senden des gemessenen Lux-Wertes an den Mikrocontroller (5), schrittweise Änderung des Lastwiderstandes (2₍₁₋ₙ₎) des lichtempfindlichen Sensors durch High/Low-Wahl von Micro-Controller- oder Schieberegisterausgängen, bis der gemessene (manipulierte) Spannungswert am Gesamtlastwiderstand des lichtempfindlichen Sensors dem Spannungswert des aktuellen Luxwertes laut im Micro-Controller (5) hinterlegter Kennlinie entspricht, Speicherung der ermittelten High/Low-Zustände und dauerhafte Einstellung des ermittelten Widerstandswertes. Es ist auch eine automatische Kalibrierung vorgesehen.

## Beschreibung

Die Erfindung betrifft ein Verfahren zur Einstellung von Helligkeitsschwellwerten bei mit einem lichtempfindlichen Sensor ausgestatteten Präsenzmeldern zur Ermittlung der Anwesenheit von Personen und zum Einschalten einer Beleuchtung in Abhängigkeit von der aktuellen Beleuchtungsituation in einem Raum o.dgl.

Für die Detektion von Bewegungen, oder der Anwesenheit von Personen in einem abgegrenzten Bereich, z.B. in einem Raum oder am Arbeitsplatz, werden Bewegungsmelder oder Präsenzmelder eingesetzt. Beiden Meldertypen ist gemein, dass Bewegungen detektiert werden und dass z.B. mittels eines lichtabhängigen Widerstandes (LDR), einer Photodiode oder eines Umgebungshelligkeitssensors die Umgebungshelligkeit gemessen wird.

Der Präsenzmelder ist definitionsgemäß etwas empfindlicher eingestellt, da er zumeist im Innenbereich eingesetzt wird und daher weniger Störeinflüssen unterliegt.

Der funktionelle Unterschied beider Meldertypen liegt in der Regel darin, dass der Präsenzmelder nicht nur nach Erkennen von "Dunkel" und einer Bewegung z.B. das Licht einschaltet (so wie das auch jeder Bewegungsmelder macht), sondern bei Erreichen einer "Hell"-Helligkeit im Raum das Kunstlicht/die Beleuchtung auch wieder ausschaltet. Damit wird eine unnötige Beleuchtung vermieden. Das soll der Energieersparnis dienen.
Bewegungsmelder haben diese Funktion in der Regel nicht, sondern schalten das Licht nur am Ende einer voreingestellten Nachlaufzeit aus, d.h. wenn keine Bewegungen mehr detektiert werden.

Entsprechend der üblichen Praxis bei B.E.G. Brück GmbH und ELPLA GmbH soll die Montage von Präsenzmeldern so erfolgen, dass der Präsenzmelder nur indirektes Licht "sieht", d.h. er soll nicht direkt von der künstlichen Beleuchtung angestrahlt werden, oder direktes Tageslicht durch Fenster "sehen".

Entweder mittels eines Drehreglers (Potentiometer) am Präsenzmelder, oder mit einer (IR-)Fernbedienung wird ein ("Dunkel")-Einschalt-Schwellwert vorgegeben. Sinkt die Umgebungshelligkeit unter den Schwellwert, führt das Erkennen von Bewegungen zum Einschalten der Beleuchtung durch den Präsenzmelder.

Gewerblich genutzte Räume, öffentliche Gebäude (bedingt auch privat genutzte Räume), unterliegen gewissen Bestimmungen und Richtlinien (z.B. DIN/EN), in denen Mindest-Luxwerte für Räume bzw. die dort befindlichen Arbeitsplätze in Abhängigkeit von den darin verrichteten Tätigkeiten gefordert werden.

Aus diesen Gründen ist es wünschenswert, die "Dunkel"-, wie auch die "Hell"-Schwelle genau den Richtlinien entsprechend einstellen zu können. Dies ist derzeit nur unter Schwierigkeiten möglich, da der Präsenzmelder in jedem Raum andere indirekte Lichtverhältnisse "sieht", die z.B. abhängig sind von
- der Farbe der Wände, Decke
- dem Bodenbelag
- den Einrichtungsgegenständen
- den Fensteröffnungen usw.
- dem Anbringungsort des Präsenzmelders.

Mit den im Handel erhältlichen Präsenzmeldern der Firmen B.E.G. Brück GmbH und ELPLA GmbH wird die Möglichkeit geboten, den aktuellen Lichtwert (Luxwert) einlesen zu können. Das erfolgt dergestalt, dass der Installateur z.B. tags über durch Verdunkeln der Fenster die geforderte Soll-Helligkeit herstellt und den erreichten Helligkeitswert Wert einfach einliest. Die andere Möglichkeit besteht darin, so lange zu warten, bis sich die entsprechenden Lichtverhältnisse von selbst einstellen, oder man nimmt einfach den Wert, den man mehr oder weniger zufällig am Potentiometer oder mit der (IR)-Fernbedienung eingestellt hat. Diese Vorgehensweise ist nicht sehr exakt und insbesondere sehr zeitaufwändig, da u.U. mehrere Versuche erforderlich sind.

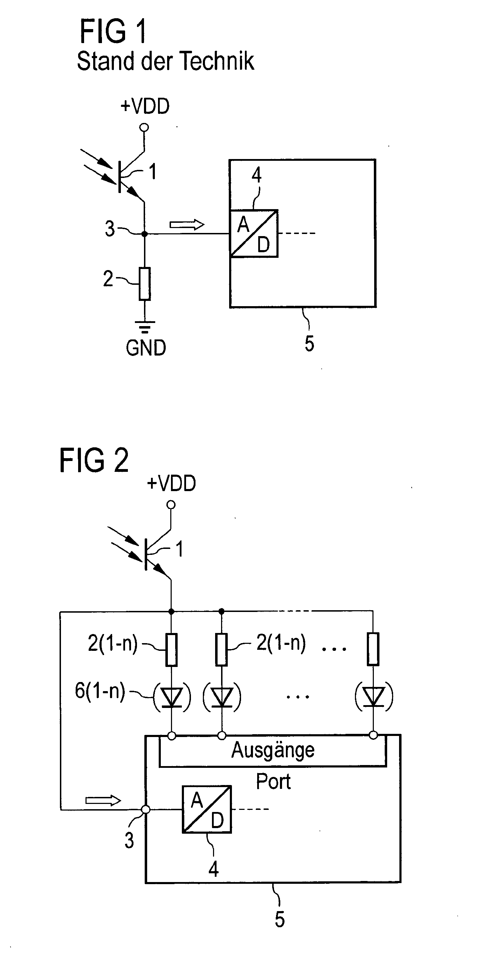

Moderne Präsenzmelder verwenden Micro-Controller zur Signalverarbeitung (vgl. Fig. 1, Stand der Technik). Fig. 1 zeigt eine Fotodiode 1, die einerseits mit einer Versorgungsspannung V_{DD} und andererseits über einen Lastwiderstand 2 mit Masse GND verbunden ist. Der lichtabhängige Fotostrom der Fotodiode 1 wird an einem Knoten 3 zwischen Fotodiode 1 und Lastwiderstand 2 abgegriffen und einem A/D-Wandler 4 zugeführt, der Bestandteil eines Mikro-Controllers 5 ist. In der Fertigung kann daher z.B. in Form einer Tabelle (PROM/EEPROM) eine Relation zwischen lichtabhängigem Fotostrom/Spannung und Lux-Werten erstellt werden. Da z.B. Fotodioden eine große Linearität zwischen Helligkeit und Kurzschluss-Fotostrom zeigen, ermöglicht die gemessene Spannung bzw. der gemessene Strom eine genaue Aussage über die Lichtverhältnisse. Dennoch bleibt es problematisch, dass die Lichtverhältnisse von Objekt zu Objekt unterschiedlich sind, so dass ein Vor-Ort-Kalibrieren des Präsenzmelders wünschenswert ist.

Der Erfindung liegt daher die Aufgabe zugrunde, ein Verfahren zur Einstellung von Helligkeitsschwellwerten bei Präsenzmeldern zu schaffen, mit dem eine einfache und schnelle Kalibrierung ermöglicht wird.

Die der Erfindung zugrunde liegende Aufgabe wird durch die kennzeichnenden Merkmale der unabhängigen Ansprüche 1 und 5 gelöst. Weitere Ausgestaltungen der Erfindung gehen aus den jeweils zugehörigen Unteransprüchen hervor.

Die Erfindung soll nachfolgend an Ausführungsbeispielen näher erläutert werden.

In den zugehörigen Zeichnungen zeigen:
- Fig. 1:: einen mit einem Mikro-Controller ausgestatteten Präsenzmelder (Stand der Technik);
- Fig. 2:: einen erfindungsgemäß kalibrierbaren Präsenzmelder;
- Fig. 3:: eine schematische Darstellung einer an einem einzel-nen Arbeitsplatz herrschenden Beleuchtungssituation mit einem Präsenzmelder und einer IR-Fernbedienung; und
- Fig. 4:: ein Funktionsschema für ein automatisches Verfahren zur Einstellung von Helligkeitsschwellwerten bei mit lichtempfindlichen Sensoren ausgestatteten Präsenz-meldern.

### Erstes Ausführungsbeispiel:

In einem Raum sind maximal 1000 Lux und minimal 0 Lux möglich.

Im Präsenzmelder hinterlegte Spannungs/Lux Kennlinie eines lichtempfindlichen Sensors, z.B. eine Fotodiode, ein Fototransistor o.dgl. (plus Zwischenwerte):

| | | |
|---|---|---|
| 1000 Lux | = | 5 V |
| 800 Lux | = | 4 V |
| 600 Lux | = | 3 V |
| 400 Lux | = | 2 V |
| 200 Lux | = | 1 V |
| 0 Lux | = | 0 V |

| | |
|---|---|
| Geforderter Mindest-Luxwert: (gemessen auf der Arbeitsplatzfläche, gemäß Arbeitsplatzrichtlinie) | 600 Lux |
| Aktueller Lux-Wert (tagsüber) Während der Installation: | 800 Lux |
| Indirekter Luxwert am Präsenzmelder zum gleichen Zeitpunkt: | 300 Lux |

Mittels einer IR-Fernbedienung kann der Installateur z.B. genau 600 Lux vorgeben, die der Präsenzmelder dann als 3 V Schwelle interpretiert. Tatsächlich sieht der Präsenzmelder aber nur 300/800*600 = 225 Lux => 1,125 V.

Die erfinderische Idee besteht nun darin, dem Präsenzmelder mitzuteilen, dass die "gesehenen" 225 Lux eigentlich 600 Lux sind. Da der Installateur immer unter Zeitdruck steht, muss dies zu jeder Zeit und unter beliebigen Lichtverhältnissen möglich sein.

Der gesamte "sichtbare" Spannungs-/Lux-Bereich im Beispiel sieht für den Präsenzmelder im Beispiel wie folgt aus:
Maximum = 1,875 V = 300/800*1000 Lux = 375 Lux
Minimum = 0 V = 0 Lux

D.h., die Steigung der Spannung/Lux Kennlinie hat sich verändert. Eine entsprechende Veränderung kann auch erreicht werden, wenn der Lastwiderstand der Fotodiode verändert wird, da der Fotostrom annähernd konstant bleibt.

Wird der Lastwiderstand z.B. um den Faktor 2,66 vergrößert, dann erzeugt der Fotostrom bei 1000 Lux nicht 1,875 V, sondern 1,875*2,66 = 5V. Damit ist der Sensor oder die im Micro-Controller hinterlegte Relation an die entsprechende Umgebung angepasst, also kalibriert.

In der Standardschaltung gem. Fig. 1 (Stand der Technik) ist z.B. eine Photodiode 1 von VDD(+) über einen Lastwiderstand 2 gegen Masse/GND geschaltet. Am Lastwiderstand 2, d.h. dem Knoten 3, wird eine Spannung mittels A/D-Wandler 4 oder Micro-Controller 5 mit integriertem A/D-Wandler abgegriffen, die mit dem eingestellten Schwellwert verglichen wird.

Bei der erfindungsgemäß geänderten Schaltung gem. Fig. 2 werden einem lichtempfindlichen Sensor, z.B. der Fotodiode 1 anstelle eines Lastwiderstandes 2 gegen Masse nun mindestens zwei oder mehr, z.B. acht Lastwiderstände 2_{(1- n)'} ggf. mit jeweils einer Diode 6₍₁₋ₙ₎ in Durchlassrichtung in Reihe, an z.B. entsprechend viele Micro-Controller Portausgänge oder an vom Micro-Controller gesteuerte Schieberegisterausgänge gelegt. Der den Widerständen 2₍₁₋ₙ₎ und der Fotodiode 1 gemeinsame Punkt wird nach wie vor auf den A/D-Wandlereingang geführt.

Nun kann mittels High/Low-Wahl (ggf. auch High-Impedance/Input Zustand) der Port- oder Schieberegisterausgänge der verschiedenen Lastwiderstände der resultierende Gesamtlastwiderstand für die Fotodiode variiert werden.

Bei z.B. 8 Lastwiderständen können 258-1 Kombinationen = Faktoren erzielt werden. (minus 1, denn bei "alle Ausgänge" = High/High-Impedance liegt ein konstanter Pegel (z.B. 5 V) am A/D-Wandler)

Die Wahl der einzelnen Widerstandswerte bestimmt die absolute Größe der Faktoren, sowie deren Abstand zueinander, mit denen der Gesamtlastwiderstand variiert werden kann.

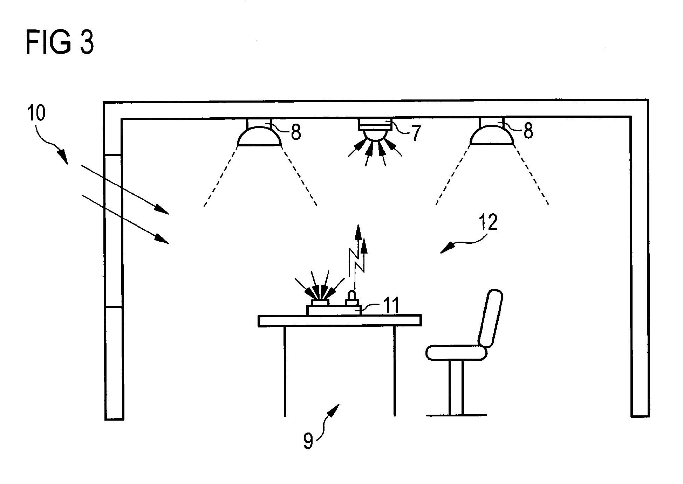

Fig. 3 zeigt eine schematische Darstellung einer an einem einzelnen Arbeitsplatz herrschenden Beleuchtungssituation mit einem Präsenzmelder 7 z.B. an der Decke eines Arbeitsraumes sowie eine Raumbeleuchtung 8. Innerhalb des Raumes befindet sich ein Arbeitsplatz 9, dessen Beleuchtungssituation neben dem Licht von der Beleuchtung 8 auch vom einfallenden Tageslicht 10, sowie weiteren Faktoren, wie Farbe der Wände, Fußbodenbelag usw. abhängt.

Der Installateur kann nun per IR-Fernbedienung 11, oder einem anderen geeigneten Sender, z.B. den Sollwert von 600 Lux vorgeben. Dann wird mittels eines Luxmeters der aktuelle Luxwert am Arbeitsplatz 9, z.B. 800 Lux, gemessen. Dann wird ebenfalls per IR-Fernbedienung 11 der Befehl "Kalibrieren" und der aktuelle Lux-Wert (im Beispiel 800 Lux) eingegeben. Die IR-Datenübertragung 12 dient nur zum Kalibrieren.

Der Micro-Controller 5 startet darauf hin eine Routine, die in einem iteraktiven Prozess durch High-Low-Wahl der Ausgänge schrittweise den Gesamtlastwiderstand der Fotodiode 1 vergrö-βert (sozusagen von unten hoch) oder umgekehrt verringert, so lange, bis der vom Präsenzmelder "gemessene" Wert dem per IR-Fernbedienung 11 eingegebenen Wert der hinterlegten Spannung/Lux-Kennlinie (im Beispiel 800 Lux = 4 V) entspricht. Das ist die "halb-automatische" Variante.

In einer vollautomatischen Variante (siehe auch zweites Ausführungsbeispiel) ist die IR-Fernbedienung 11 mit einem Lux-Meter und einem A/D-Wandler zur Umwandlung der analogen Messwerte in digitale Messwerte ausgestattet.

Der Installateur muss nun lediglich die IR-Fernbedienung 11 auf den Arbeitsplatz legen und gibt den Sollwert (im Beispiel 600 Lux) und den Befehl "Kalibrieren" ein. Die IR-Fernbedienung 11 sendet darauf hin die erforderlichen drei Befehle oder einen entsprechenden Befehlscode an den Micro-Controller 5 des Präsenzmelders 7.

Befinden sich mehrere Arbeitsplätze im Raum, in dem natürlich nur ein Präsenzmelder notwendig ist, kann der automatische Abgleich nacheinander für jeden Arbeitsplatz durchgeführt werden, wobei die Abgleichergebnisse zunächst in einer Tabelle abgelegt werden. Nach Abschluss aller Messungen im Raum muss dann dem Micro-Controller lediglich durch Drücken einer geeigneten Taste auf der IR-Fernbedienung der Abschluss der Messvorgänge mitgeteilt werden.

Anschließend wird aus der Tabelle der Wert mit dem größten resultierenden Gesamtlastwiderstand ausgelesen und im EEPROM gespeichert und dauerhaft eingestellt.

Damit ist der Präsenzmelder automatisch auf den Arbeitsplatz mit den schlechtesten Lichtverhältnissen kalibriert.

Grundsätzlich muss die Kalibrierung wiederholt werden, wenn in dem zu überwachenden Raum Änderungen vorgenommen werden, welche die Lichtverhältnisse beeinflussen (z.B. neuer Fußbodenbelag, neuer Anstrich), was durch das erfindungsgemäße Verfahren sehr einfach und schnell bewerkstelligt werden kann.

### Zweites Ausführungsbeispiel:

Nachfolgend soll ein automatisches Verfahren zur Einstellung von Helligkeitsschwellwerten bei mit lichtempfindlichen Sensoren, z.B. einer Fotodioden o.dgl. ausgestatteten Präsenzmeldern zur Ermittlung der Anwesenheit von Personen und Einschalten einer Beleuchtung in Abhängigkeit von der aktuellen Beleuchtungssituation in einem Raum o.dgl. beschrieben werden.

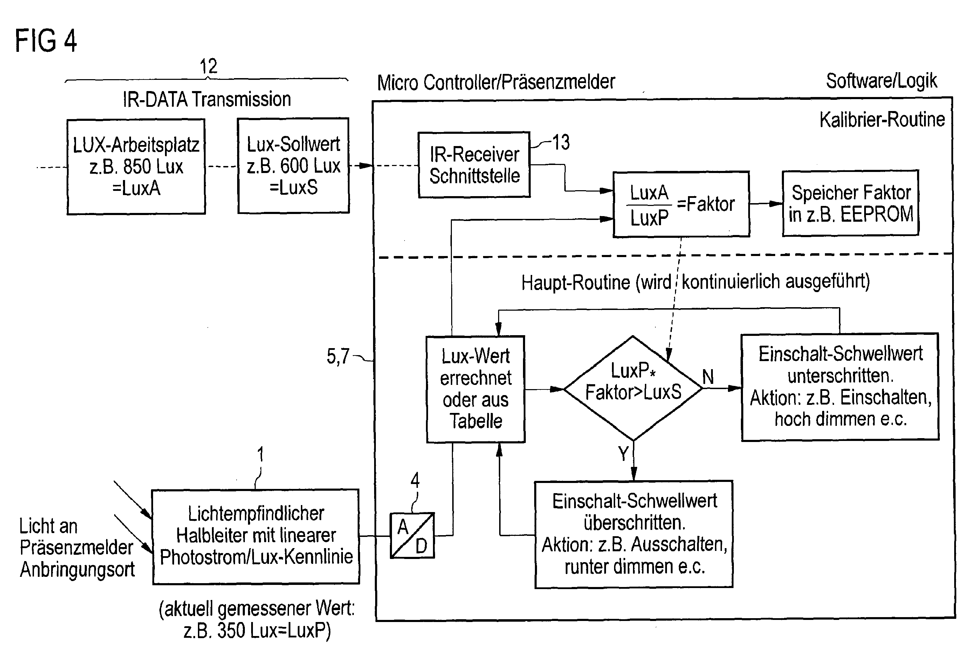

Fig. 4 zeigt ein Funktionsschema für ein automatisches Verfahren zur Einstellung von Helligkeitsschwellwerten bei mit lichtempfindlichen Sensoren ausgestatteten Präsenzmeldern.

Voraussetzung ist ein Präsenzmelder 7, der mit einer Fotodiode 1 bzw. einem anderen lichtempfindlichen Halbleiter mit linearer Fotostrom/Lux-Kennlinie zur Ermittlung eines Luxwertes und einem Mikro-Controller 5, z.B. Mikroprozessor mit A/D-Wandlern 4 sowie einer Empfangseinheit, z.B. einer Infrarot-Empfangseinheit 13, ausgestattet ist. Der Mikro-Controller kann auch in ein WLAN-Netz oder ein anderes drahtloses Netz integriert sein.

Weiterhin ist eine Infrarot-Fernbedienung 11 oder eine in ein WLAN-Netz integrierte Fernbedienung mit einer Fotodiode o.dgl. zur Ermittlung einer Luxwertes vorgesehen.

Zur Einstellung von Helligkeitsschwellwerten bei Präsenzmeldern und zur einfachen und schnelle Kalibrierung wird zunächst eine Strom/Spannung/Lux-Kennlinie der Fotodiode 1 des Präsenzmelders 7 im Micro-Controller 5 gespeichert.

Als nächstes wird z.B. von der IR Fernbedienung 11 oder dem WLAN-Netz ein vorgegebener Lux-Wert für einen Arbeitsplatz an den Micro-Controller 5 im Präsenzmelder 7 gesendet.

Darauf hin wird der aktuelle Lux-Wert am Arbeitsplatz 9 (Fig. 3) gemessen und der gemessene Lux-Wert an den Mikro-Controller 5 per IR-Datenübertragung 12 an die IR-Empfangseinheit 13 gesendet und eine softwaremäßige Kalkulation eines Korrekturfaktors basierend auf dem Messwert am Arbeitsplatz 9 und den Messwerten der Fotodiode des Präsenzmelders vorgenommen und in einem Speicher, z.B. einem EEPROM 14, gespeichert (Fig. 4). Der Korrekturwert wird mit dem der am Mikro-Controller 5 des Präsenzmelders 7 gemessenen oder aus einer Tabelle entnommenen Luxwert (Helligkeitswert) multipliziert, um den Mikro-Controller 5 auf den am Arbeitsplatz 9 zu erwartenden Luxwert zu kalibrieren.

Da in einem Raum normalerweise ein Präsenzmelder angeordnet ist, in dem Raum aber mehrere Arbeitsplätze vorhanden sein können, kann der Kalibriervorgang wie vorstehend beschrieben, nacheinander für mehrere Arbeitsplätze einer Örtlichkeit durchgeführt werden. Dabei werden die jeweils ermittelten Korrekturwerte in einer Tabelle im Mikro-Controller abgelegt und anschließend der größte Korrekturwert als Korrekturwert für den Mikro-Controller ausgewählt.

Eine andere weniger Speicherplatz und Rechenaufwand benötigende Möglichkeit besteht darin, dass der Kalibriervorgang nacheinander für mehrere Arbeitsplätze einer Örtlichkeit durchgeführt wird, dass die Korrekturwerte von zwei aufeinander folgenden Messungen temporär gespeichert werden und nach Ausführung der jeweils zweiten Messung nur der größere Korrekturwert gespeichert wird und dass nach Abschluss der Messungen der zuletzt ermittelte größte Korrekturwert dem Mikro-Controller vorgegeben wird.

Auf entsprechende Weise kann vorgegangen werden, wenn in einem Raum mehrere Präsenzmelder vorhanden sind, für die sich dann gegebenenfalls unterschiedliche Korrekturwerte ergeben.

Unter lichtempfindlichen Sensoren werden Umgebungshelligkeitssensoren mit linearer Lux-Kennlinie verstanden. Solche Sensoren können lichtempfindliche Halbleiter, wie Fotodioden, Fototransistoren usw. oder andere lichtempfindliche Elemente sein, wenn diese eine lineare Fotostrom/Lux-Kennlinie aufweisen.

### Bezugszeichenliste

- 1: Fotodiode
- 2: Lastwiderstand
- 2₍₁₋ₙ₎: Lastwiderstände
- 3: Knoten
- 4: A/D-Wandler
- 5: Mikro-Controller
- 6 ₍₁₋ₙ₎: Dioden
- 7: Präsenzmelder
- 8: Raumbeleuchtung
- 9: Arbeitsplatz
- 10: Tageslicht
- 11: IR-Fernbedienung
- 12: IR-Fernbedienung
- 13: IR-Empfangseinheit
- 14: EEPROM

## Patentansprüche

1. Verfahren zur Einstellung von Helligkeitsschwellwerten bei mit einem lichtempfindlichen Sensor und Lastwiderständen ausgestatteten Präsenzmeldern zur Ermittlung der Anwesenheit von Personen und zum Einschalten einer Beleuchtung in Abhängigkeit von der aktuellen Beleuchtungssituation in einem Raum o.dgl., **gekennzeichnet durch**
- Speichern einer Strom/Spannung/Lux-Kennlinie im Micro-Controller (5),
- Senden eines vorgegebenen Lux-Wertes für einen Arbeitsplatz (9) an den Micro-Controller (5),
- Messen des aktuellen Lux-Wertes am Arbeitsplatz (9),
- Senden des gemessenen Lux-Wertes an den Mikrocontroller (5),
- schrittweise Änderung (Vergrößerung oder Verkleinerung) des Lastwiderstandes (2(1-n) des lichtempfindlichen Sensors **durch** High/Low-Wahl von Micro-Controller- oder Schieberegisterausgängen, bis der gemessene (manipulierte) Spannungswert am Gesamtlastwiderstand des lichtempfindlichen Sensors dem Spannungswert des aktuellen Luxwertes laut im Micro-Controller (5) hinterlegter Kennlinie entspricht,
- Speicherung der ermittelten High/Low-Zustände (Bitmuster) in einem EEPROM (14) und
- dauerhafte Einstellung des ermittelten Widerstandswertes.

2. Verfahren nach Anspruch 1, **dadurch gekennzeichnet, dass** mindestens zwei gleichgroße oder unterschiedlich große Lastwiderstände (2₍₁₋ₙ₎) an entsprechend viele Micro-Controller- oder Schieberegister-Ausgänge gelegt werden und dass anschließend mittels High/Low-Wahl der Ausgänge durch den Micro-Controller der Gesamtlastwiderstand für den lichtempfindlichen Sensor stufenweise auf- oder absteigend variiert wird.

3. Verfahren nach Anspruch 2, **dadurch gekennzeichnet, dass** den Lastwiderständen jeweils eine Diode (6₍₁₋ₙ₎) in Reihe geschaltet wird.

4. Verfahren nach Anspruch 1 bis 3, **dadurch gekennzeichnet, dass** der Abgleich nacheinander für mehrere Arbeitsplätze (9) einer Örtlichkeit durchgeführt wird, dass die Abgleichergebnisse (High/Low-Zustände der Ausgänge (Bitmuster), in einer Tabelle im Mikro-Controller abgelegt werden und dass anschließend aus der Tabelle das Bitmuster mit dem größten resultierenden Gesamtwiderstandswert ausgewählt, bleibend im EEPROM gespeichert und dauerhaft an den entsprechenden Controller- oder Schieberegister-Ausgängen eingestellt wird.

5. Verfahren zur Einstellung von Helligkeitsschwellwerten bei mit einem lichtempfindlichen Sensor ausgestatteten Präsenzmeldern zur Ermittlung der Anwesenheit von Personen und zum Einschalten einer Beleuchtung in Abhängigkeit von der aktuellen Beleuchtungssituation in einem Raum o.dgl., **gekennzeichnet durch**
- Speichern einer Strom/Spannung/Lux-Kennlinie des lichtempfindlichen Sensors im Micro-Controller des Präsenzmelders,
- Senden eines vorgegebenen Lux-Wertes für einen Arbeitsplatz an den Micro-Controller,
- Messen des aktuellen Lux-Wertes am Arbeitsplatz,
- Senden des gemessenen Lux-Wertes an den Mikrocontroller, und
- softwaremäßige Kalkulation eines Korrekturfaktors mit dem der am Mikro-Controller des Präsenzmelders gemessene Luxwert (Helligkeitswert) zu multiplizieren ist, um den Mikro-Controller auf den am Arbeitsplatz zu erwartenden Luxwert zu kalibrieren.

6. Verfahren nach Anspruch 5, **dadurch gekennzeichnet, dass** der Kalibriervorgang nacheinander für mehrere Arbeitsplätze einer Örtlichkeit durchgeführt wird, dass die ermittelten Korrekturwerte in einer Tabelle im Mikro-Controller abgelegt werden und dass anschließend der größte Korrekturwert als Korrekturwert für den Mikro-Controller ausgewählt wird.

7. Verfahren nach Anspruch 5, **dadurch gekennzeichnet, dass** der Kalibriervorgang nacheinander für mehrere Arbeitsplätze einer Örtlichkeit durchgeführt wird, dass die Korrekturwerte von zwei aufeinander folgenden Messungen temporär gespeichert werden und nach Ausführung der jeweils zweiten Messung nur der größere Korrekturwert gespeichert wird und dass nach Abschluss der Messungen der zuletzt ermittelte größte Korrekturwert dem Mikro-Controller vorgegeben wird.
